(19) Europäisches Patentamt
European Patent Office
Office européen des brevets

(11) Publication number: **0 041 915**
**A1**

(12) # EUROPEAN PATENT APPLICATION

(21) Application number: 81630042.0

(22) Date of filing: 09.06.81

(51) Int. Cl.³: C 08 K 5/18
C 08 L 21/00, C 08 L 7/00

(30) Priority: 09.06.80 US 157768

(43) Date of publication of application:
16.12.81 Bulletin 81/50

(84) Designated Contracting States:
BE DE FR GB IT NL

(71) Applicant: THE GOODYEAR TIRE & RUBBER COMPANY
1144 East Market Street
Akron, Ohio, 44316(US)

(72) Inventor: Kothari, Vipin Mohanlal
95 Hollywood Avenue
Akron, Ohio 44313(US)

(74) Representative: Weyland, Joseph Jean Pierre
Goodyear International Tire Technical Center Patent
Department Avenue Gordon Smith
Colmar-Berg(LU)

(54) **Styrylated amine antioxidants.**

(57) There is disclosed a method for the protection of oxidizable organic materials wherein compounds such as styrylated N,N'-diphenyl-p-phenylenediamine are added to the organic material.

EP 0 041 915 A1

Croydon Printing Company Ltd.

# STYRYLATED AMINE ANTIOXIDANTS

## Technical Field

This invention relates to the preservation of oxidizable compositions such as rubbers, more particularly to the use of aralkylated phenyl amines as age-resistors.

## Background Art

The prior art reveals the preparation of alkylated amines and their use as antioxidants. For example, see U.S. Patent Nos. 3,505,225, 3,452,056, 3,649,690, 2,943,112, 3,072,603, 2,776,994, 3,714,257, 3,714,258, 3,496,230 and German Patent No. 895,973.

U.S. Patent No. 4,163,757 discloses a reaction between diphenylamine and styrene in the presence of a base modified acid clay catalyst to improve yields of para-styrenated diphenylamine.

The prior art and literature do not disclose or suggest a reaction between amine compounds such as N,N'-diphenyl-p-phenylenediamine and p-hydroxy-diphenylamine with compounds such as styrene or α-methylstyrene to produce stabilizers that are useful in the protection of oxidizable organic materials.

Specifically, the prior art does not disclose or suggest that aralkylation of aromatic amines such as N,N'-diphenyl-p-phenylenediamine by aromatic olefins such as styrene or α-methylstyrene would produce compounds that are useful as antioxidants for rubbery materials.

## Disclosure of Invention

There is disclosed a composition comprising an oxidizable polymer in an intimate admixture with said polymer is an antioxidant amount of at least one compound of the structural formulae (I) and (II):

(I)

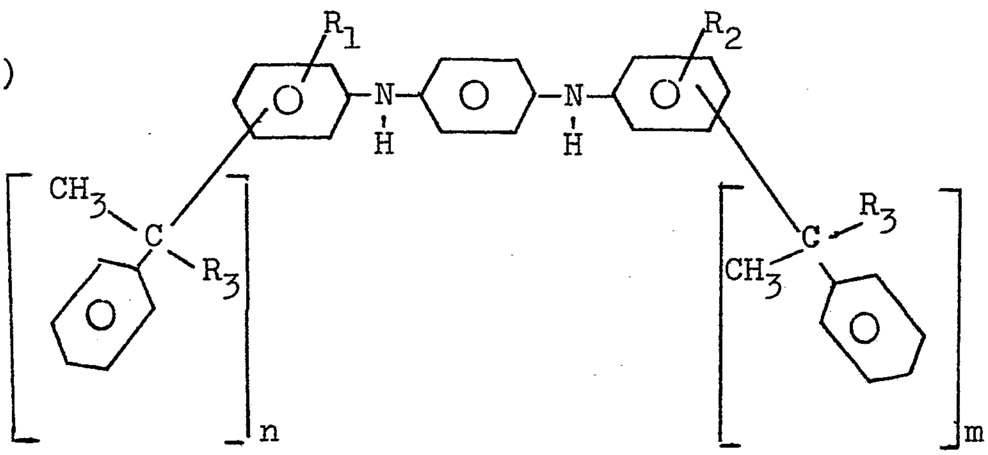

(II)

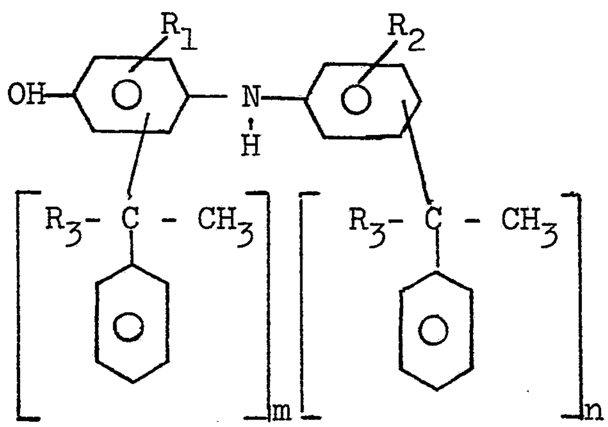

wherein $R_1$ and $R_2$ are the same or different radicals selected from the group consisting of hydrogen and alkyl radicals of 1 to 4 carbon atoms; $R_3$ is hydrogen or a methyl radical; and n is equal to 0, 1 or 2 and m is equal to 0, 1 or 2; with the provision that n plus m must equal 1, 2, 3 or 4.

To produce compounds of formulae (I) and (II) compounds with structural formulae (III) and (V) are reacted together or structural formulae (IV) and (V) are reacted together in the presence of a clay catalyst at from 180 to 250°C:

(III)

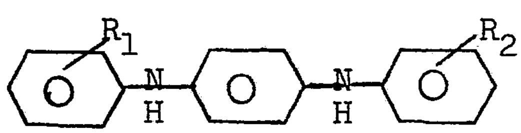

(IV) 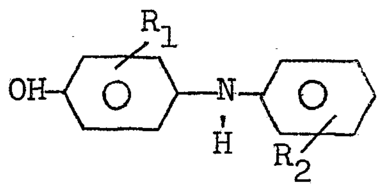

(V) 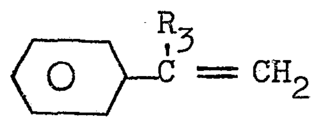

wherein $R_1$ and $R_2$ are the same or different radicals selected from the group consisting of hydrogen and alkyl radicals of 1 to 4 carbon atoms; $R_3$ is hydrogen or a methyl radical.

<u>More Detailed Disclosure</u>

Representative of the compounds of formulae (III) and (IV) that can be used in the present invention are N,N'-diphenyl-p-phenylenediamine, N-phenyl, N'-methylphenyl-p-phenylenediamine, p-hydroxydiphenylamine, 3-methyl-4-hydroxydiphenylamine, 3'-methyl-4-hydroxydiphenylamine.

Representative of the compounds formula (V) that can be used in the present invention are styrene and α-methylstyrene.

The compounds of formulae (I) and (II) are prepared by addition of an aromatic olefin of structural formula (V) to a mixture of the aromatic amine; (structural formulae (III) or (IV))and a clay catalyst, at temperatures from 180 to 250°C. with vigorous stirring. The molar ratio of aromatic amine to olefin may range from 1:1 to 1:4 with a more preferred ratio being 1:2. One skilled in the art will realize that the molar ratios of the reactants will determine the mix of mono, di, tri and tetra substituted products that will result. The mixture of mono, di, tri and tetra substituted products is what is used to stabilize organic compounds.

The catalyst used to produce compounds of structural formulae (I) and (II) are clay catalysts. It is well-known that clays, especially synthetic and naturally occurring acidic clays can be used effectively as catalysts for alkylation of aromatic amines. These catalysts are preferred due to the ease of processing the reaction mixture, good reaction rates and selectivity to certain alkylated amine isomers.

Representative of polymers that can be protected by the compounds disclosed in this invention are oxidizable rubbery polymers of conjugated dienes which include natural rubber and the various synthetic diene rubbers which are similar to natural rubber in their aging characterisitics such as polychloroprene, butyl rubber, which is a polymerization product of a major proportion of a mono olefin, such as isobutylene and a minor proportion of a multi olefin, such as butadiene or isoprene; the rubbery copolymers of butadiene and styrene which may contain from 50 to 75% by weight of butadiene; the rubbery copolymers of butadiene and acrylonitrile and polyisoprene.

In addition, the compounds disclosed in the present invention are useful as age resistors for raw rubbers in latex form, coagulated rubber latices or vulcanized rubbers, and may be present in an amount from 0.05 to 8.0% by weight, based on the weight of the rubber. Although it is generally preferred to use from 0.05 to 6% by weight based on the weight of the rubber, a more preferred range is from 0.1 to 5 parts per hundred by weight of polymer.

The antioxidants disclosed in this invention can be incorporated into the rubber in any customary manner. They may be added in the form of physical mixture or in the form of emulsions using any of the known emulsifiers such as monovalent metal hydroxides, fatty acids, organic soaps, etc. They may be added to the rubber in the form of a latex or they may be milled into coagulated rubber in the usual manner.

## Example 1

### Preparation of Styrylated N,N'-diphenyl-p-phenylenediamine

To a reaction vessel equipped with a stirrer, thermometer, addition funnel and condenser was charged one mole (260 grams) N,N'-diphenyl-p-phenylenediamine and 65 grams of Super Filtrol Grade 1 clay (a naturally occurring clay marketed by Filtrol Corporation). This reaction mixture was heated to 200-230°C. and dropwise addition of 156 grams (1.5 mole) styrene was begun with vigorous stirring. The rate of addition was adjusted so as to maintain a mild reflux. After completion of the addition of styrene in 4.7 hours, the reaction mixture was maintained at 225 - 230°C. for 1.5 hours with stirring. The reaction mixture was then cooled to 150°C. and the mixture was diluted with toluene and filtered hot to remove the clay catalyst. Volatiles were stripped under vacuum and heat to yield 375 grams of a mixture of mono, di and tri styrylated N,N'-diphenyl-p-phenylenediamine. A yield of 91% of theory.

## Example 2

### Preparation of α-methyl styrylated N,N'-diphenyl-p-phenylenediamine

The procedure of Example 1 was followed except that 177 grams (1.5 mole) of α-methylstyrene was added rather than 1.5 moles of styrene with a reaction time of 4.0 hours after completion of addition at 205 - 230°C. to yield 305 grams of a mixture of mono, di and tri α-methylstyrylated N,N'-diphenyl-p-phenylenediamine for a 70% yield.

## Example 3

### Preparation of styrylated p-hydroxydiphenylamine

The procedure of Example 1 was followed except that 1 mole (185 grams) of p-hydroxydiphenylamine was used in place of N,N'-diphenyl-p-phenylenediamine and 1 mole of styrene was used with a reaction time of 3.0 hours after 2.75 hours for addition at 190-230°C. to yield 250 grams of a mixture of mono, di and tri styrylated p-hydroxydiphenylamine for a yield of 90%.

## Example 4

### Preparation of α-methylstyrylated-p-hydroxydiphenylamine

The procedure of Example 3 was followed except that 118 grams (1 mole) of α-methylstyrene was used in place of styrene and the reaction was conducted at 210°C. to 230°C. for 2.00 hours after addition of α-methylstyrene to provide a 90% yield of mono, di and tri-substituted α-methylstyrene-p-hydroxydiphenylamine.

## Test Data

To test the effectiveness of the compounds of structural formulae (I) and (II) to protect rubbery materials from the deleterious effects of oxidation, tests were run in a carbon black loaded natural rubber stock against a control. The antioxidants of this invention and the control were evaluated in the rubber stock at 0.75 parts per hundred by weight of the natural rubber stock.

The antioxidants of the present invention had a negligible effect on the scorch resistance and rate of cure of the vulcanizate.

The antioxidants of this invention functioned as flex crack inhibitors. In addition, the compounds of formulae (I) and (II) have demonstrated excellent shelf life stability and low volatility.

TABLE I

| | Unstabilized Natural Rubber | Natural Rubber + 0.75 pph Example 1 | Natural Rubber + 0.75 pph Example 3 | Natural Rubber + 0.75 pph Example 4 |
|---|---|---|---|---|
| Aged 70 hrs. at 70°C. | | | | |
| Tensile* | 27.8 | 27 | 27.4 | 27.5 |
| Elongation** | 490 | 470 | 490 | 480 |
| Aged 70 hrs. at 100°C. | | | | |
| Tensile* | 14.7 | 21.4 | 20.0 | 19.4 |
| Elongation** | 290 | 380 | 350 | 340 |
| P G Flex *** Crack Growth at 5 x $10^5$ cycles | 0.41 | 0.18 | .22 | .18 |

*Tensile. The aging procedure prior to the tensile strength and elongation tests was conducted according to ASTM D-573. Tensile strength tests were conducted on an Autographic machine similar to test ASTM-412 on an Instron Tester. The values are comparable for the Autographic versus the Instron Tester.

**Elongation. Aging procedures in a hot air oven were conducted according to ASTM D-573 and conducted on an Autographic test device similar to an Instron Tester providing elongation values.

***PG Flex. Samples prepared were evaluated after 500,000 cycles to determine the rate of growth of an initial crack placed within the test sample to determine the stabilizers ability to prevent such mechanical damage. The test is described in an article by J.H. Field, India Rubber World, Vol. 115, pages 802-805, 1947

Table I shows that the compounds of formulae (I) and (II) when incorporated into a natural rubber stock provides protection from thermal degradation. Specifically, incorporation of compounds of formulae (I) and (II) prevent the loss of rubber's natural resiliency and strength.

Additional tests were conducted to demonstrate the effectiveness of compounds of formulae (I) and (II) in synthetic formulations, specifically SBR-1006. Table II shows oxygen absorption data for compounds for Examples 1 through 4 at 1.0 pph by weight of rubber and a stabilizer of choice presently used in the industry.

TABLE II

$O_2$ Absorption in SBR-1006 at 100°C.

| Compound 1.0 pph | Example 1 | Example 2 | Example 3 | Example 4 | Nailax* |
|---|---|---|---|---|---|
| Hr. to 1% $O_2$ Absorption | 386 | 373 | 323 | 283 | 370 |

* Nailax is the trade name of Goodyear Tire & Rubber Company for the reaction production 1 mole of hydroquinone, 1 mole aniline and 1 mole toluidine.

From the data presented in Table II it can be seen that the compounds of structural formulae (I) and (II) provide resistance to oxidative degradation of rubbery materials such as SBR-1006.

## Industrial Applicability

There is presently a need for new materials that will provide stabilization to organic compounds from the deleterious effects of oxidation and thermal degradation.

The compounds of this invention provide satisfactory oxidative and thermal degradation protection while at the same time exhibiting excellent shelf life stability in addition to low volatility. The increased molecular weight of the compounds of this invention provide the decrease in volatility and therefore are less likely to be leached or removed from the material which they are intended to protect.

While certain representative embodiments and details have been shown for the purpose of illustrating the invention, it will be apparent to those skilled in this art that various changes and modifications may be made therein without departing from the spirit or scope of the invention.

## Claims

1. A composition comprising an oxidizable polymer in an intimate admixture with said polymer as an antioxidant, an antioxidant amount of at least one compound of the structural formulae (I) and (II):

(I)

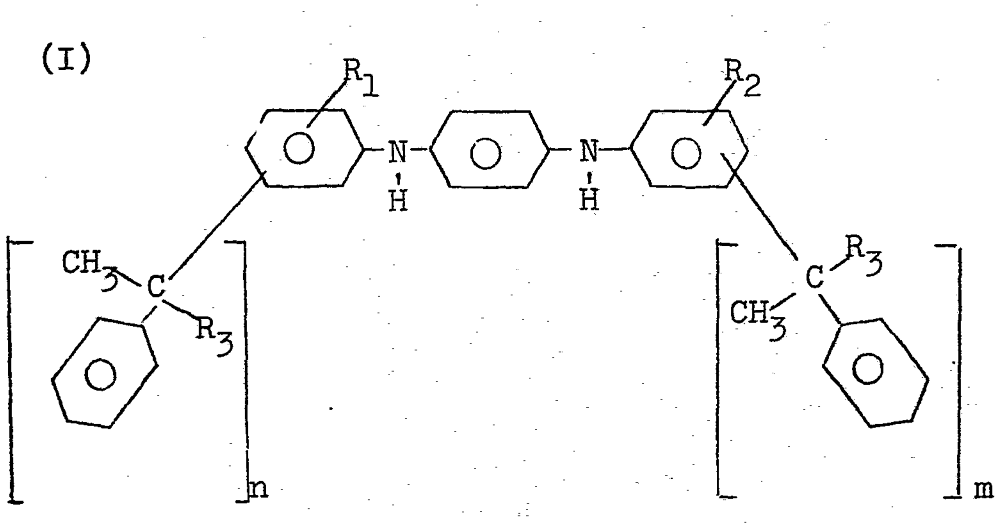

(II)

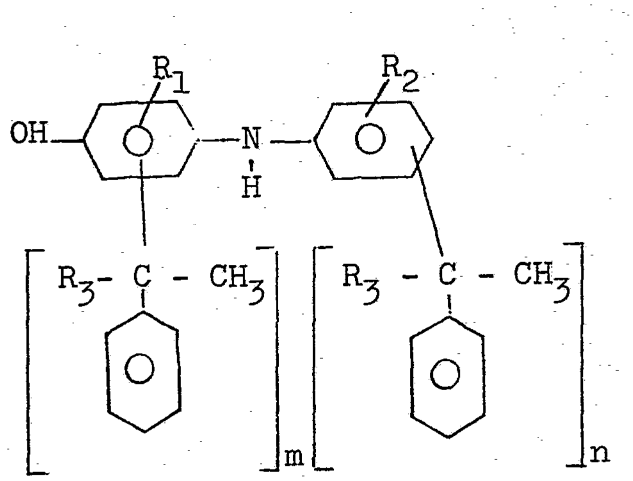

wherein $R_1$ and $R_2$ are the same or different radicals selected from the group consisting of hydrogen and alkyl radicals of 1 to 4 carbon atoms; $R_3$ is hydrogen or a methyl radical; and n is equal to 0, 1 or 2 and m is equal to 0, 1 or 2; with the provision that n plus m must equal 1, 2, 3 or 4.

2. A composition according to claim 1 wherein the antioxidant is a mixture of mono, di and tri styrylated N,N'-diphenyl-p-phenylenediamine and wherein the antioxidant amount of the stabilizer is from 0.1 to 5.0 parts per hundred by weight of the polymer.

3. A composition according to claim 1 wherein the antioxidant is a mixture of mono, di and tri α-methylstyrylated-N,N'-diphenyl-p-phenylenediamine and wherein the antioxidant amount of the stabilizer is from 0.1 to 5.0 parts per hundred by weight of the polymer.

4. A composition according to claim 1 wherein the antioxidant is a mixture of mono, di and tri styrylated-p-hydroxydiphenylamine and wherein the antioxidant amount of the stabilizer is from 0.1 to 5.0 parts per hundred by weight of polymer.

5. A composition according to claim 1 wherein the antioxidant is a mixture of mono, di and tri α-methylstyrylated-p-hydroxydiphenylamine and wherein the antioxidant amount of the stabilizer is from 0.1 to 5.0 parts per hundred by weight of polymer.

European Patent Office

# EUROPEAN SEARCH REPORT

0041915

Application number

EP 81 63 0042

## DOCUMENTS CONSIDERED TO BE RELEVANT

| Category | Citation of document with indication, where appropriate, of relevant passages | Relevant to claim |
|---|---|---|
| A | US - E - 25 260 (F. WILSON)<br>* Claims *<br>--<br>GB - A - 1 012 945 (GOODYEAR)<br>* Claims, page 1, lines 79-87 *<br>--<br>DE - A - 2 748 749 (GOODYEAR)<br>* Page 3, lines 11-13; example 1 *<br>---- | 1<br><br><br>1<br><br><br>1 |

CLASSIFICATION OF THE APPLICATION (Int. Cl.[3])

C 08 K 5/18
C 08 L 21/00
7/00

TECHNICAL FIELDS SEARCHED (Int. Cl.[3])

C 08 K 5/18
C 08 L 7/00
9/00
11/00
21/00
C 07 C 85/24

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-09-1981 | HOFFMANN |